# EUROPÄISCHE PATENTSCHRIFT

(11) **EP 2 747 963 B1**
(45) Veröffentlichungstag und Bekanntmachung des Hinweises auf die Patenterteilung: **26.04.2017**
(21) Anmeldenummer: 12772976.2
(22) Anmeldetag: 18.10.2012
(51) Int. Cl.: B23D 55/08, B27B 13/10, B26D 1/54

(54) **SCHNEIDEMASCHINE**
CUTTING MACHINE
MACHINE DE COUPE

(30) Priorität: 21.10.2011 DE 102011084987
(43) Veröffentlichungstag der Anmeldung: 02.07.2014
(73) Patentinhaber: Fecken-Kirfel GmbH & Co. KG, 52070 Aachen (DE)
(72) Erfinder: TILLMANN, Michael, 52146 Würselen (DE); TÖNNES, Helmut, 52355 Düren (DE)
(74) Vertreter: dompatent von Kreisler Selting Werner - Partnerschaft von Patent- und Rechtsanwälten mbB
(86) Internationale Anmeldenummer: PCT/EP2012/070652
(87) Internationale Veröffentlichungsnummer: WO 2013/057190

(56) Entgegenhaltungen:
- GB-A- 2 180 439
- NL-A- 8 701 579

## Beschreibung

Die vorliegende Erfindung betrifft eine Schneidemaschine nach dem Oberbegriff des Anspruchs 1.

An eine Schneidemaschine, insbesondere eine Schneidemaschine zum Schneiden von Kunst- und Schaumstoffmaterialien werden immer höhere Anforderungen in Bezug auf die Schneidqualität, die Geschwindigkeit sowie Robustheit gestellt. Die mit den Schneidemaschinen zu schneidenden Kunst- und Schaumstoffmaterialien werden zunehmend schwerer und härter bzw. stauchhärter. Beispielhaft zu schneidende Materialien sind nicht nur im Komfortschaumbereich zu finden, wie beispielsweise bei Matratzen oder Möbeln, sondern es sollen auch harte und halbharte PU-, PE- oder PS-Schäume geschnitten werden, die z.B. Verwendung in Isolierungen von Bauwerken, Kühlschränken oder Fahrzeugen finden.

Seit einigen Jahren werden Bandmessermaschinen für das Schneiden oder Trennen von Schaumstoffen etc. eingesetzt. Die Bandmesser laufen über mehrere Messerumlenkscheiben und werden in einem Schneidbereich über eine Länge bis zu 2,5 m frei gespannt. Eine derartige Schneidemaschine ist beispielsweise aus der DE 11 84 069 oder DE 75 30 595 der Anmelderin vorbekannt. Bei derartigen Schneidemaschinen ist es jedoch notwendig, dass das Bandmesser oberhalb des Materials zurückgeführt wird, so dass ein großer Rahmen für das umlaufende Bandmesser notwendig ist. Aus DE 101 29 909 ist eine Schneidemaschine bekannt, bei der das Bandmesser über einen Messerdrehkopf verdrillt wird, um einen Konturschnitt auszuüben.

Es ist ferner bekannt, dass Schneidemaschinen gegenläufig geführte Messer verwenden. Diese haben den Vorteil, dass ein besonders vorteilhafter Schnitt möglich werden kann, da durch die gegenläufige Anordnung der Messer mikroskopisch gesehen ein Reißen des Materials erreicht wird, wobei das Reißen durch die gegenläufige Anordnung mit einer doppelten Geschwindigkeit gegenüber einem einfach geführten Messer erfolgt.

Gegenläufig geführte Bandmesser sind beispielsweise aus JP 06-182691 und DE 101 29 909 A1 vorbekannt.

Bei einigen vorbekannten Schneidemaschinen mit gegenläufiger Messerführung besteht das Problem, dass mit diesen ein Konturschnitt nur schwierig möglich ist, da aufgrund der Messerführung ein großer Maschinenbereich bei der Drehung des Schneidebereichs des Messers mitgeführt werden müsste. Eine Verdrehung lediglich des Schneidebereiches des Bandmessers, wie es zuvor beschrieben ist, ist beim doppelläufigen Bandmesser nicht möglich, da sich bei einer Verdrillung die Bandmesser gegeneinander verschieben würden.

Bei der beispielsweise aus der DE 101 29 909 A1 bekannten Schneidemaschine hat es sich jedoch herausgestellt, dass die Standzeit der Messer aufgrund der großen Beanspruchung in den Umlenkeinrichtungen relativ kurz sind. GB 2 180 439 A und NL 8 701 579 offenbaren jeweils eine Brotschneidemaschine mit umlaufenden Sägebändern, die ebenfalls in den jeweiligen Umlenkeinrichtungen einer großen Beanspruchung unterliegen.

Es besteht daher die Aufgabe der vorliegenden Erfindung darin, eine Schneidemaschine mit einem umlaufenden Bandmesser bereitzustellen, bei der in einem Schneidebereich das Bandmesser gegenläufig geführt ist, wobei die Umlenkeinrichtungen mit einem geringen vorrichtungstechnischen Aufwand verwirklichbar sind und gleichzeitig eine hohe Standzeit des Bandmessers möglich ist.

Die erfindungsgemäße Schneidemaschine ist durch den Patentanspruch 1 definiert.

Die erfindungsgemäße Schneidemaschine weist ein umlaufendes Bandmesser auf, wobei das Bandmesser in einem einen Schneidebereich bildenden Umlaufabschnitt des Bandmessers gegenläufig geführt ist. Die gegenläufig geführten Abschnitte des Bandmessers führen somit gemeinsam einen Schnitt aus. Ferner weist die Schneidemaschine eine erste und eine zweite Umlenkeinrichtung zum Umlenken und Rückführen des Bandmessers auf. Die Erfindung ist dadurch gekennzeichnet, dass die erste und die zweite Umlenkeinrichtung das Bandmesser jeweils ohne Gegenbiegewechsel umlenkt und rückführt. Mit anderen Worten: In der ersten und der zweiten Umlenkeinrichtung wird das Bandmesser ausschließlich mit Einfachbiegewechseln umgelenkt und rückgeführt. Unter Einfachbiegewechsel wird dabei eine Biegung des Bandmessers lediglich in eine Richtung verstanden, so dass das Bandmesser lediglich durch eine schwellende Biegebeanspruchung belastet wird. Ein Einfachbiegewechsel ist beispielsweise eine Führung des Bandmessers aus einem geraden Verlauf in einen gebogenen Verlauf und wieder zurück in den geraden Verlauf. Ein Gegenbiegewechsel ist hingegen ein Verlauf, bei dem beispielsweise das Bandmesser zunächst gebogen wird, danach gerade verläuft und anschließend in entgegengesetzte Richtung gebogen wird. Ein Gegenbiegewechsel ist beispielsweise bei dem umlaufenden Bandmesser aus DE 101 29 909 A1 vorgenommen worden.

Es hat sich nunmehr herausgestellt, dass ein derartiger Gegenbiegewechsel ein Bandmesser sehr stark beansprucht, so dass es zu einem vorzeitigen Bruch des Bandmessers kommen kann. Dadurch sind die Standzeiten des Bandmessers relativ gering. Die erfindungsgemäße Schneidemaschine sieht nun vor, dass die Umlenkeinrichtung des Bandmessers ohne Gegenbiegewechsel umlenkt und rückführt. Dadurch wird das Bandmesser nur gering belastet und die Standzeiten des Bandmessers können gegenüber dem Stand der Technik deutlich erhöht werden. Bei einer Führung ohne Gegenbiegewechsel, d.h. lediglich mit Einfachbiegewechseln, werden Einzelbereiche im Querschnitt des Bandmessers ausschließlich gestaucht und wieder entspannt. Andere Bereiche des Querschnitts werden ausschließlich gestreckt und wieder entspannt. Bei einem Gegenbiegewechsel hingegen werden beide zuvor genannten Bereiche sowohl gestaucht als auch gestreckt. Dadurch kommt es zu einer vorzeitigen Materialermüdung und zu einem Bruch des Bandmessers.

Darüber hinaus verwirklicht die erfindungsgemäße Schneidemaschine durch das Vorsehen von einer ersten und einer zweiten Umlenkeinrichtung eine sehr kompakte Bauform, die darüber hinaus mit einem vorrichtungstechnisch geringen Aufwand verwirklichbar ist.

Die Erfindung kann ferner vorsehen, dass das Bandmesser während eines vollständigen Umlaufs ohne Gegenbiegewechsel geführt ist. Mit anderen Worten: Das Bandmesser wird in der ersten und der zweiten Umlenkeinrichtung stets nur in die gleiche Richtung gebogen.

In einem bevorzugten Ausführungsbeispiel der Erfindung ist vorgesehen, dass die erste und die zweite Umlenkeinrichtung jeweils eine erste Messerscheibenvorrichtung und eine zweite Messerscheibenvorrichtung aufweisen. Durch die Verwirklichung der ersten und der zweiten Umlenkeinrichtung über Messerscheibenvorrichtungen ist eine Umlenkung und Rückführung des Bandmessers auf eine besonders einfache Art und Weise möglich, indem das Bandmesser über die Messerscheiben der Messerscheibenvorrichtung umgelenkt wird. Darüber hinaus ist ein Antrieb des Bandmessers über eine Messerscheibe auf besonders einfache Art und Weise möglich. Jede Messerscheibenvorrichtung kann mindestens eine Messerscheibe aufweisen. Selbstverständlich ist es auch möglich, dass eine Messerscheibenvorrichtung mehr als eine Messerscheibe aufweist.

In einem besonders bevorzugten Ausführungsbeispiel der Erfindung ist vorgesehen, dass die erste und die zweite Messerscheibenvorrichtung das Bandmesser in der Umlenkeinrichtung jeweils an dem der Umlenkeinrichtung zugeführten Messertrum und dem von der Umlenkeinrichtung abgehenden Messertrum vorbeiführt. Das Bandmesser ist somit in dem unmittelbar an die Umlenkeinrichtung angrenzenden Bereich gegenläufig geführt und bildet den der Umlenkeinrichtung zugeführten bzw. von der Umlenkeinrichtung abgehenden Messertrum. Die erste und die zweite Messerscheibenvorrichtung führt innerhalb der Umlenkeinrichtung das Messer nun an diesem Bereich vorbei. Um dies zu verwirklichen, kann die Erfindung vorsehen, dass die erste und die zweite Messerscheibenvorrichtung einen Versatz bei dem Verlauf des Bandmessers erreichen, um das Bandmesser an dem Messertrum vorbeizuführen. Es hat sich herausgestellt, dass eine derartige Führung des Bandmessers - im Gegensatz zu einer Beanspruchung durch einen Gegenbiegewechsel - das Bandmesser nur sehr gering belastet, so dass die Standzeit des Bandmessers nicht oder nur gering beeinflusst wird. Die erfindungsgemäße Schneidemaschine kann somit auf einfache Art und Weise ermöglichen, dass das Bandmesser ohne Gegenbiegewechsel umgelenkt und rückgeführt wird.

In einem Ausführungsbeispiel der Erfindung ist vorgesehen, dass jede Messerscheibenvorrichtung mindestens eine Messerscheibe aufweist. Selbstverständlich ist es auch möglich, dass eine Messerscheibenvorrichtung mehr als eine Messerscheibe aufweist. In einem bevorzugten Ausführungsbeispiel weist jede Messerscheibenvorrichtung eine Messerscheibe auf, so dass jede Umlenkeinrichtung zwei Messerscheiben besitzt. Über die Messerscheiben ist das Bandmesser in besonders vorteilhafter Weise umlenkbar. Darüber hinaus kann das Bandmesser über eine Messerscheibe in vorteilhafter Weise angetrieben werden.

Es kann vorgesehen sein, dass mindestens eine Messerscheibe jeder Messerscheibenvorrichtung gegenüber einer senkrecht zu der Schneidebene verlaufenden Hauptebene gekippt ist. Dadurch kann der für das Vorbeiführen des Bandmessers an dem der Umlenkeinrichtung zugeführten Messertrum bzw. dem von der Umlenkeinrichtung abgehenden Messertrum notwendige Versatz in vorteilhafter Weise erreicht werden. Durch das Kippen der Messerscheibe wird das über die Messerscheibe geführte Bandmesser leicht verdreht. In einem Ausführungsbeispiel der Erfindung, bei der jede Messerscheibenvorrichtung eine Messerscheibe aufweist, wird der der Umlenkeinrichtung zugeführte Messertrum von der Messerscheibe der ersten Messerscheibenvorrichtung an dem der Umlenkeinrichtung zugeführten Messertrum bzw. dem von der Umlenkeinrichtung abgehenden Messertrum vorbeigeführt und von der Messerscheibe der zweiten Messerscheibenvorrichtung zu dem von der Umlenkeinrichtung abgehenden Messertrum zurückgeführt. Dabei ist die Messerscheibe der ersten Messerscheibenvorrichtung in entgegengesetzte Richtung zu der Messerscheibe der zweiten Messerscheibenvorrichtung gekippt. Das Bandmesser umschlingt die Messerscheiben jeweils mit einem Umschlingungswinkel von etwa 270°. Die Hauptebene ist im Rahmen der Erfindung die Ebene, die senkrecht zu der Schneidebene und auch senkrecht zu der Schneidrichtung verläuft.

In einem Ausführungsbeispiel der Erfindung ist vorgesehen, dass sich die Seitenflächen des Bandmessers in dem Schneidbereich berühren. Mit anderen Worten: In dem Schneidbereich gleiten die Seitenflächen des gegenläufig geführten Bandmessers aneinander vorbei. Dadurch ist ein besonders feiner Schnitt mit der erfindungsgemäßen Schneidemaschine möglich.

In einem Ausführungsbeispiel der Erfindung kann vorgesehen sein, dass vor und/oder nach dem Schneidbereich eine Messerführung vorgesehen ist. Mithilfe der Messerführung kann die Schneidqualität verbessert werden, da das Bandmesser während des Schneidevorgangs an der Messerführung abgestützt wird und somit Schwingungen des Bandmessers sowie Bewegungen des Bandmessers während des Schneidvorgangs reduziert werden können. Darüber hinaus kann mithilfe der Messerführung gewährleistet werden, dass sich die Flanken des Bandmessers in dem Schneidbereich berühren, so dass ein sehr feiner Schnitt ausgeführt werden kann.

Erfindungsgemäß kann vorgesehen sein, dass das Bandmesser eine einseitig angefaste, vorzugsweise gezahnte Schneide aufweist. Das Bandmesser mit einer einseitig angefasten Schneide bildet in dem Schneidbereich durch die gegenläufige Anordnung eine beidseitig angefaste Schneide. Dadurch kann eine besonders gute Schneidqualität erreicht werden.

In einem besonders bevorzugten Ausführungsbeispiel der Erfindung ist vorgesehen, dass im Bereich des Umlaufs des Bandmessers mindestens ein Schleifapparat angeordnet ist. Über den Schleifapparat kann das Bandmesser während eines Schneidvorgangs ständig nachgeschliffen werden, so dass eine weitestgehend gleichbleibend hohe Schneidqualität erreicht werden kann.

Dabei kann vorgesehen sein, dass der Schleifapparat im Umlaufsabschnitt angeordnet ist. Dies hat den Vorteil, dass der Schleifapparat die Umlenkung des Bandmessers nicht beeinflusst. Darüber hinaus ist der Schleifapparat somit unmittelbar vor dem Schneidbereich angeordnet, so dass das Bandmesser unmittelbar vor dem Schneidvorgang geschliffen werden kann.

In einem Ausführungsbeispiel der Erfindung ist vorgesehen, dass der Schleifapparat nur eine Fase des gegenläufig geführten Bandmessers schleift. Die Fase des Bandmessers wird somit in einem Umlauf nur einmalig geschliffen. Dies hat den Vorteil, dass die Fase des Bandmessers stets mit dem gleichen Schleifapparat geschliffen wird, so dass die gegenläufig geführten Bandmesserteile exakt die gleiche Fasenlänge bzw. den gleichen Fasenwinkel aufweisen. Dadurch bilden die gegenläufig geführten Bandmesserteile eine symmetrische Schneide, wodurch eine besonders hohe Schnittqualität erreicht werden kann.

Bei der erfindungsgemäßen Schneidemaschine kann ferner vorgesehen sein, dass die erste und die zweite Umlenkeinrichtung auf einem gemeinsamen Rahmen angeordnet sind, der verschwenkbar gelagert ist. Dadurch kann ein Konturschnitt ausgeübt werden, indem das gesamte Bandmesser mit der ersten und der zweiten Umlenkeinrichtung verschwenkt wird.

Die Erfindung sieht in vorteilhafter Weise vor, dass mindestens eine Messerscheibenvorrichtung einen Antrieb aufweist. Dabei kann vorgesehen sein, dass eine Messerscheibe der Messerscheibenvorrichtung über den Antrieb angetrieben wird. Insbesondere ist vorgesehen, dass nur eine einzige Messerscheibe der gesamten Schneidemaschine angetrieben wird. Dadurch wird vermieden, dass durch asynchronen Antrieb mehrerer Messerscheiben es zu Belastungen des Bandmessers oder zu Schwingungen während des Umlaufs des Bandmessers kommt.

In einem Ausführungsbeispiel der Erfindung ist vorgesehen, dass mindestens eine Messerscheibenvorrichtung eine Spannvorrichtung aufweist. Über die Spannvorrichtung lässt sich die Spannung des Bandmessers einstellen. Dadurch lässt sich die Spannung des Bandmessers an das zu schneidende Schneidgut anpassen und es ist auch möglich, dass aufgrund von thermischen Ausdehnungen sich ändernde Messerspannungen ausgeglichen werden können. Es ist auch möglich, dass mehrere Messerscheiben der Messerscheibenvorrichtungen jeweils eine Spannvorrichtung aufweisen, wobei die Spannvorrichtung eine Verschiebung der Messerscheiben in der Hauptebene ermöglicht. Selbstverständlich können auch mehrere Messerscheiben von zwei unterschiedlichen Messerscheibenvorrichtungen gemeinsam eine Spannvorrichtung aufweisen. Vorzugsweise ist vorgesehen, dass nur die Messerscheiben, an denen kein Antrieb vorgesehen ist, eine Spannvorrichtung aufweisen.

Im Folgenden wird unter Bezugnahme auf die nachfolgenden Figuren die Erfindung näher erläutert.

Es zeigen:
- Figur 1: eine schematische Darstellung eines ersten Ausführungsbeispiels einer erfindungsgemäßen Schneidemaschine,
- Figur 2: eine schematische Detailansicht einer Messerscheibe der in Fig. 1 gezeigten Schneidemaschine,
- Figur 3: eine schematische Schnittansicht des gegenläufig geführten Bandmessers und
- Figur 4: eine schematische Darstellung eines zweiten Ausführungsbeispiels einer erfindungsgemäßen Schneidemaschine.

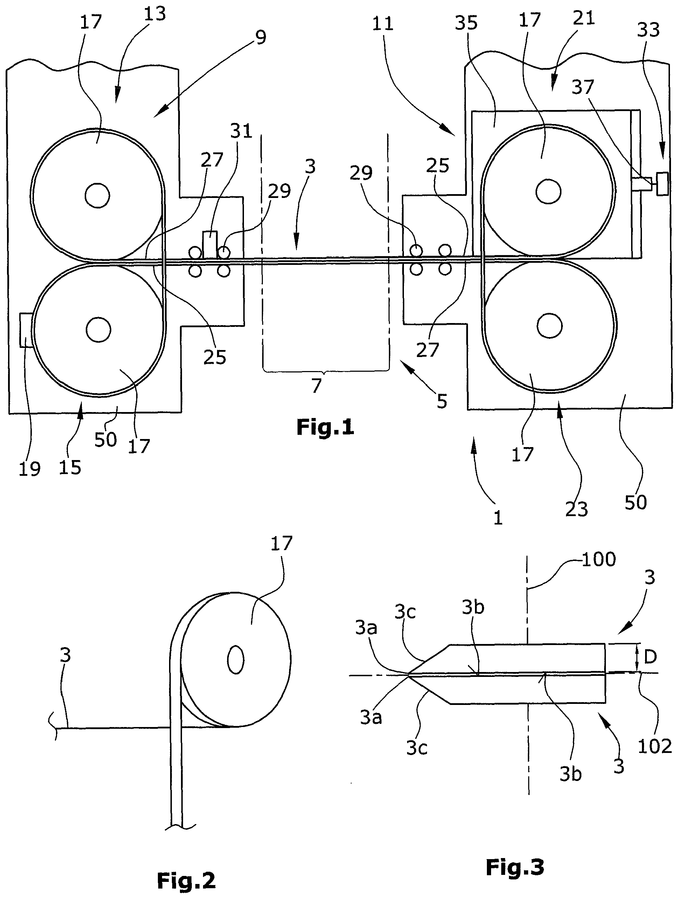

In Fig. 1 ist eine erfindungsgemäße Schneidemaschine 1 schematisch in Draufsicht dargestellt.

Die Schneidemaschine 1 weist ein Bandmesser 3 auf, das umlaufend geführt ist. Das Bandmesser 3 ist dabei in einem Umlaufabschnitt 5, der einen Schneidbereich 7 bildet, gegenläufig geführt.

Die Schneidemaschine 1 weist eine erste Umlenkeinrichtung 9 und eine zweite Umlenkeinrichtung 11 auf, über die das Bandmesser 3 jeweils umgelenkt und rückgeführt wird. Dabei erfolgt die Umlenkung und Rückführung des Bandmessers durch die erste und zweite Umlenkeinrichtung 9, 11 ohne einen Gegenbiegewechsel. Mit anderen Worten: Das Bandmesser wird in den Umlenkeinrichtungen 9 und 11 jeweils nur Einfachbiegewechseln unterzogen.

Die erste Umlenkeinrichtung 9 weist eine erste Messerscheibenvorrichtung 13 und eine zweite Messerscheibenvorrichtung 15 auf. Die erste Messerscheibenvorrichtung 13 und die zweite Messerscheibenvorrichtung 15 weisen jeweils eine Messerscheibe 17 auf, um die das Bandmesser 3 geführt ist. Die Messerscheibe 17 der zweiten Messerscheibenvorrichtung 15 wird dabei über einen Antrieb 19 angetrieben. Bei dem in Fig. 1 dargestellten Ausführungsbeispiel erfolgt somit der umlaufende Antrieb des Bandmessers 3 über die Messerscheibe 17 der ersten Messerscheibenvorrichtung 13.

Die zweite Umlenkeinrichtung 11 weist eine erste Messerscheibenvorrichtung 21 und eine zweite Messerscheibenvorrichtung 23 auf, die ebenfalls jeweils eine Messerscheibe 17 aufweisen.

Bei der Umlenkung und Rückführung des Bandmessers 3 in der ersten Umlenkeinrichtung 9 wird der bei einer Umlaufrichtung der Umlenkeinrichtung 9 zugeführte Messertrum 25 zunächst über die Messerscheibe 17 der zweiten Messerscheibenvorrichtung 15 umgelenkt.

Die Messerscheiben 17 der ersten und zweiten Messerscheibenvorrichtungen 13, 15, 21, 23 sind gegenüber einer Hauptebene gekippt angeordnet. Die gekippte Anordnung ist beispielsweise schematisch in Fig. 2 dargestellt. Die Hauptebene 100 verläuft senkrecht zu der im Schneidbereich 7 durch das Bandmesser 3 gebildeten Schneidebene 102 und auch senkrecht zu der Schneidrichtung. Die Hauptebene 100 und die Schneidebene 102 sind schematisch in der Fig. 3 gezeigt, in der das Bandmesser 3 in dem Schneidbereich 7, in dem es gegenläufig geführt ist, schematisch im Schnitt dargestellt ist.

Durch die gekippte Anordnung der Messerscheibe 17 der zweiten Messerscheibenvorrichtung wird das Bandmesser 3 leicht versetzt, so dass das Bandmesser nicht mehr in der Hauptebene 100 läuft. Dadurch kann das Bandmesser 3 an dem der ersten Umlenkeinrichtung 9 zugeführten Messertrum 25 bzw. an dem von der Umlenkeinrichtung 9 abgehenden Messertrum 27 vorbeigeführt werden. Anschließend wird das Bandmesser 3 über die Messerscheibe 17 der ersten Messerscheibenvorrichtung 13 wiederum umgelenkt und dem von der Umlenkeinrichtung abgehenden Messertrum 27 zugeführt.
Das Bandmesser umläuft die Messerscheiben 17 der ersten und zweiten Messerscheibenvorrichtung 13 und 15 dabei jeweils mit einem Umschlingungswinkel von etwa 270°. In gleicher Weise wird das Bandmesser 3 auf eine zweite Umlenkeinrichtung 11 umgelenkt und rückgeführt.

Das Bandmesser 3 wird bei der Umlenkung über die Messerscheibe 17 der zweiten Messerscheibenvorrichtung 15 aus einem geraden Verlauf in eine Richtung gebogen und nach Verlassen der Messerscheibenvorrichtung 17 wieder in einem geraden Verlauf geführt. Bei der Umlenkung über die Messerscheibe 17 der ersten Messerscheibenvorrichtung 13 erfolgt ebenfalls eine Biegung aus einem vorangegangenen geraden Verlauf und eine erneute Führung in einem geraden Verlauf nach Verlassen der Messerscheibe 17. Dabei erfolgt diese Biegung in die gleiche Richtung wie die vorangegangene Biegung.

Das Bandmesser 3 wird in der erfindungsgemäßen Schneidemaschine somit ausschließlich Einfachbiegewechseln in die gleiche Richtung unterzogen und wird lediglich zusätzlich einer Torsionsbelastung unterzogen. Es hat sich herausgestellt, dass das Bandmesser 3 bei einer derartigen Führung wesentlich geringer belastet wird als bei einer Führung über Gegenbiegewechsel.

Die erfindungsgemäße Schneidemaschine 1 weist ferner zwei Messerführungen 29 auf, die vor bzw. nach dem Schneidbereich 7 angeordnet sind. Über die Messerführung 29 kann das Bandmesser 3 seitlich des Schneidbereichs 7 abgestützt werden, wodurch die Schnittqualität verbessert werden kann. Das Bandmesser 3 kann sich während des Schneidvorgangs an der Messerführung 29 abstützen, wobei Schwingungen sowie Bewegungen des Bandmessers 3 während des Schneidvorgangs vermieden werden können.

Ferner weist die Schneidemaschine 1 einen Schleifapparat 31 auf, der das Bandmesser 3 während des Betriebs schleift. In dem in Fig. 1 dargestellten Ausführungsbeispiel ist der Schleifapparat 31 in einer der Messerführungen 29 integriert.

Wie am besten aus Fig. 3 hervorgeht, weist das Bandmesser 3 eine einseitig angefaste Schneide 3a auf. Die Schneide 3a kann beispielsweise auch gezahnt sein. In dem Umlaufabschnitt 5, der den Schneidbereich 7 bildet, wird das Bandmesser 3 gegenläufig so geführt, dass die Seitenflächen 3b, die nicht die die Schneide 3a bildenden Fasen 3c aufweisen, aneinander anliegen. Dadurch wirkt das Bandmesser 3 in dem Schneidbereich durch die gegenläufige Führung wie ein Messer, das eine beidseitig angefaste Schneide aufweist. Durch das Anliegen der Seitenflächen 3b aneinander wird die Gesamtstärke des gegenläufig geführten Bandmessers möglichst gering gehalten, so dass ein feiner Schnitt möglich ist.

Die Verwendung von einem gezahnten Messer hat den Vorteil, dass durch die gegenläufige Führung im Schneidbereich es zu einer Scherenwirkung zwischen den einzelnen Zähnen kommt, wodurch ein besonders vorteilhaftes Schnittergebnis erreicht werden kann.

Der Schleifapparat 31 schleift während eines Umlaufes des Bandmessers 3 die Fase 3c des Bandmessers 3 einmal. Dadurch kann gewährleistet werden, dass die Fase 3c des im Schneidbereich 7 gegenläufig geführten Bandmessers 3 den exakt gleichen Fasenwinkel und die gleichen Fasenlänge aufweist. Dadurch ist ein sehr präziser Schnitt ermöglicht, da eine symmetrische Schneide gebildet wird.

In Fig. 2 ist die gegenüber der Hauptebene 100 gekippte Stellung eines der Messerscheiben 17 schematisch dargestellt. Dabei ist die Hauptebene 100 durch die Zeichnungsebene gegeben. Bei dem in Fig. 1 dargestellten Ausführungsbeispiel der Schneidemaschine sind alle Messerscheiben 17 gegenüber der Hauptebene 100 gekippt, wobei die Messerscheiben 17 einer der Umlenkeinrichtungen 9, 11 jeweils in entgegengesetzte Richtung gekippt sind, so dass jeweils durch eine Messerscheibe das Bandmesser 3 aus der Hauptebene 100 heraus versetzt wird, wohingegen die andere Messerscheibe das Bandmesser zurück in die Hauptebene 100 führt.

Bei dem in Fig. 1 dargestellten Ausführungsbeispiel einer erfindungsgemäßen Schneidemaschine 1 weist die erste Messerscheibenvorrichtung 21 der zweiten Umlenkeinrichtung 11 ferner eine Spannvorrichtung 33 auf, über die die Spannung des Bandmessers 3 verändert werden kann. Dazu wird die Messerscheibe 17 der ersten Messerscheibenvorrichtung 21 auf einer beweglichen Platte 35 gelagert, die über einen pneumatischen Zylinder 37 bewegt werden kann.

Selbstverständlich ist es auch möglich, dass die Messerscheiben 17 der zweiten Messerscheibenvorrichtung 23 der zweiten Umlenkeinrichtung 11 oder der Messerscheibenvorrichtung 15, 17 der ersten Umlenkeinrichtung 9 eine entsprechende Spannvorrichtung aufweisen. Es ist auch möglich, dass beispielsweise die Messerscheiben 17 der ersten und zweiten Messerscheibenvorrichtung 21, 23 gemeinsam auf einer beweglichen Platte angeordnet sind und eine gemeinsame Spannvorrichtung aufweisen. Die Spannvorrichtung 33 ist in dem in Fig. 1 dargestellten Ausführungsbeispiel so angeordnet, dass die Messerscheibe 17 in der Hauptebene 100 in einer Richtung parallel zu der Schneidebene 102 bewegt werden kann. Selbstverständlich ist es auch möglich, dass die Messerscheibe in der Hauptebene 100 in einer Richtung senkrecht zu der Schneidebene 102 verstellt wird.

Die erste und zweite Umlenkeinrichtung 9, 11 ist ferner auf einem Rahmen 50 angeordnet. Über den Rahmen 50 kann die Schneidvorrichtung beispielsweise in sämtliche Richtungen verstellbar sein, indem der gesamte Rahmen in die entsprechende Richtung bewegt wird. Ferner kann vorgesehen sein, dass der Rahmen 50 auch verschwenkbar ist, so dass ein Konturschnitt mit der erfindungsgemäßen Schneidemaschine 1 möglich ist. Dabei wird das gesamte Bandmesser mit der ersten und zweiten Umlenkeinrichtung 9, 11 über den Rahmen 50 verschwenkt. Insbesondere bei der Verwendung der erfindungsgemäßen Schneidemaschine 1 als Konturschneidemaschine ist die erfindungsgemäße Anordnung von besonderem Vorteil, da aufgrund des geringen vorrichtungstechnischen Aufwandes das während des Konturschnittes zu verschwenkende Gewicht relativ gering gehalten werden kann.

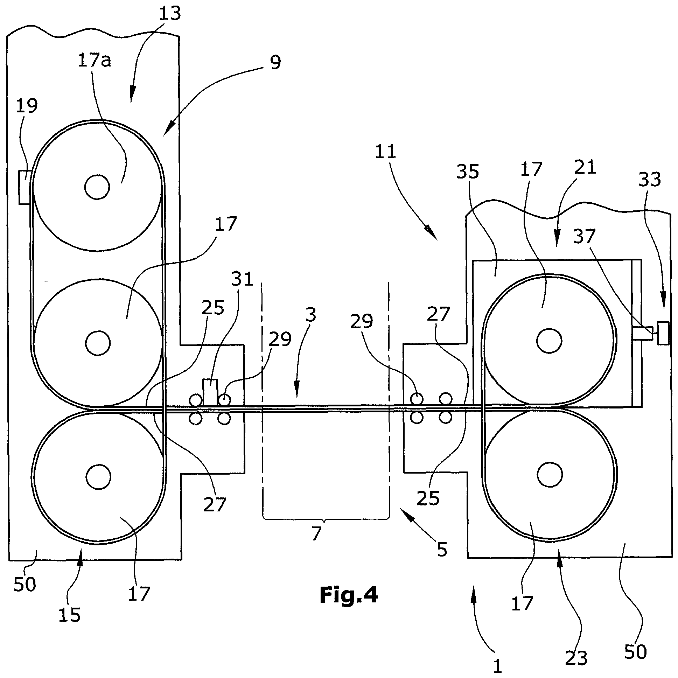

In Fig. 4 ist ein zweites Ausführungsbeispiel einer erfindungsgemäßen Schneidemaschine 1 schematisch dargestellt. Das in Fig. 4 dargestellte Ausführungsbeispiel entspricht im Wesentlichen dem in Fig. 1 dargestellten Ausführungsbeispiel mit der Abwandlung, dass die erste Messerscheibenvorrichtung 13 der ersten Umlenkeinrichtung 9 aus einer Messerscheibe 17 und einer zweiten Messerscheibe 17a besteht. Bei dem in Fig. 4 dargestellten Ausführungsbeispiel ist der Antrieb 19 an der zweiten Messerscheibe 17a angeordnet. Dies hat den Vorteil, dass die angetriebene Messerscheibe 17a nicht gegenüber der Hauptebene 100 gekippt angeordnet werden muss. Dies kann die Belastung des Messermaterials in einigen Anwendungsfällen reduzieren.

Es hat sich ferner herausgestellt, dass der Durchmesser der Messerscheiben 17 sich auf die Standzeit des Bandmessers auswirkt, da bei zu kleinen Scheiben ein zu großer Versatz des Bandmessers 3 pro Messerlänge erzeugt wird. Dabei hat sich herausgestellt, dass im Verhältnis der Dicke D des Bandmessers 3 zu dem Durchmesser der Messerscheiben 17 zwischen 1:500 und 1:1000 besonders vorteilhaft ist.

Die erfindungsgemäße Schneidemaschine 1 kann für unterschiedliche Applikationen eingesetzt werden. Beispielsweise kann die Schneidemaschine eine Horizontalschneidemaschine oder eine Vertikalschneidemaschine sein. Im Falle einer Horizontalschneidemaschine wären die Messerscheiben 17 im Wesentlichen wie in den Fign. 1 und 4 dargestellt angeordnet. Bei einer Vertikalschneidemaschine, die eine horizontale Schneidrichtung besitzt, wäre die Anordnung gegenüber der in der Fig. 1 und Fig. 4 dargestellten Anordnung im Wesentlichen um 90° gedreht. Bei einer Vertikalschneidemaschine, die ebenfalls eine vertikale Schneidrichtung ausführen soll, wären die Messerscheiben 17 im Wesentlichen horizontal liegend angeordnet.

Bei einem Ausführungsbeispiel, bei dem die erfindungsgemäße Schneidemaschine 1 als Konturschneidemaschine ausgebildet ist, wird über den Rahmen 50 die gesamte Vorrichtung verschwenkt, so dass ein Schnitt in die vertikale und horizontale Richtung erfolgen kann.

Mit der erfindungsgemäßen Schneidemaschine lassen sich in besonders vorteilhafter Weise Kunst- und Schaumstoffmaterialien schneiden. Selbstverständlich ist jedoch die Schneidemaschine nicht auf solche Materialien beschränkt.

Bevorzugte Kunst- und Schaumstoffmaterialien sind Materialien aus dem Komfortschaumbereich, die beispielsweise in Matratzen oder Möbeln Anwendung finden, oder auch harte oder halbharte PU-, PE- oder PS-Schäume, sowie auch Verbundschaum, der beispielsweise als Recyclingprodukt Abfallmaterial wiederverwertet.

## Patentansprüche

1. Schneidemaschine (1) mit einem umlaufenden Bandmesser (3), wobei das Bandmesser (3) in einem einen Schneidbereich (7) bildenden Umlaufabschnitt (5) des Bandmessers (3) gegenläufig geführt ist und mit einer ersten und einer zweiten Umlenkeinrichtung (9, 11) zum Umlenken und Rückführen des Bandmessers (3),
**dadurch gekennzeichnet, dass**
die erste und die zweite Umlenkeinrichtung (9, 11) das Bandmesser jeweils ohne Gegenbiegewechsel umlenkt und rückführt.

2. Schneidemaschine (1) nach Anspruch 1, **dadurch gekennzeichnet, dass** das Bandmesser (3) in einem vollständigen Umlauf des Bandmessers (3) ohne Gegenbiegewechsel geführt ist.

3. Schneidemaschine (1) nach Anspruch 1 oder 2, **dadurch gekennzeichnet, dass** die erste und die zweite Umlenkeinrichtung (9, 11) jeweils eine erste Messerscheibenvorrichtung (13, 21) und eine zweite Messerscheibenvorrichtung (15, 23) aufweisen.

4. Schneidemaschine (1) nach Anspruch 3, **dadurch gekennzeichnet, dass** die erste und die zweite Messerscheibenvorrichtungen (13, 21, 15, 23) das Bandmesser in der jeweiligen Umlenkeinrichtung (9, 11) jeweils an dem der Umlenkeinrichtung (9, 11) zugeführten Messertrum (25) und dem von der Umlenkeinrichtung (9, 11) abgehenden Messertrum (27) vorbeiführt.

5. Schneidemaschine (1) nach Anspruch 3 oder 4, **dadurch gekennzeichnet, dass** jede Messerscheibenvorrichtung (13, 15, 21, 23) mindestens eine Messerscheibe (17, 17a) aufweist.

6. Schneidemaschine (1) nach Anspruch 5, **dadurch gekennzeichnet, dass** mindestens eine Messerscheibe (17) jeder Messerscheibenvorrichtung (13, 15, 21, 23) gegenüber einer senkrecht zu der Schneideebene (102) verlaufenden Hauptebene (100) gekippt ist.

7. Schneidemaschine (1) nach einem der Ansprüche 1 bis 6, **dadurch gekennzeichnet, dass** sich die Seitenflächen (3b) des Bandmessers (3) in dem Schneidbereich (7) berühren.

8. Schneidemaschine (1) nach einem der Ansprüche 1 bis 7, **dadurch gekennzeichnet, dass** vor und/oder nach dem Schneidbereich (7) eine Messerführung (29) angeordnet ist.

9. Schneidemaschine (1) nach einem der Ansprüche 1 bis 8, **dadurch gekennzeichnet, dass** das Bandmesser (3) eine einseitig angefaste, vorzugsweise gezahnte Schneide (3a) aufweist.

10. Schneidemaschine (1) nach einem der Ansprüche 1 bis 9, **dadurch gekennzeichnet, dass** im Bereich des Umlaufs des Bandmessers (3) mindestens ein Schleifapparat (31) angeordnet ist.

11. Schneidemaschine (1) nach Anspruch 10, **dadurch gekennzeichnet, dass** der Schleifapparat eine Fase (3b) des gegenläufig geführten Bandmessers (3) schleift.

12. Schneidemaschine (1) nach einem der Ansprüche 1 bis 11, **dadurch gekennzeichnet, dass** die erste und die zweite Umlenkeinrichtung (9, 11) auf einem gemeinsamen Rahmen (50) angeordnet sind, der verschwenkbar gelagert ist.

13. Schneidemaschine (1) nach einem der Ansprüche 3 bis 12, **dadurch gekennzeichnet, dass** mindestens eine der Messerscheibenvorrichtungen (13, 15, 21, 23) einen Antrieb aufweist.

14. Schneidemaschine (1) nach einem der Ansprüche 3 bis 13, **dadurch gekennzeichnet, dass** mindestens eine der Messerscheibenvorrichtungen (13, 15, 21, 23) eine Spannvorrichtung aufweist.

## Claims

1. A cutting machine (1) comprising an endless band knife (3), the band knife (3) being guided in opposed directions in a revolution zone (5) of the band knife (3) forming a cutting zone (7), and comprising a first and a second deflecting means (9, 11) for deflecting and returning the band knife (3),
**characterized in that**
the first and the second deflecting means (9, 11) each deflect and return the band knife without a reverse bending cycle.

2. The cutting machine (1) of claim 1, **characterized in that** the band knife (3) is guided without any reverse bending cycle throughout the full revolution of the band knife (3).

3. The cutting machine (1) of claim 1 or 2, **characterized in that** the first and the second deflecting means (9, 11) each comprise a first knife pulley device (13, 21) and a second knife pulley device (15, 23).

4. The cutting machine (1) of claim 3, **characterized in that** in the respective deflecting means (9, 11), the first and the second knife pulley devices (13, 21, 15, 23) each guide the band knife past the knife strand (25) fed to the deflecting means (9, 11) and the knife strand (27) leaving the deflecting means (9, 11).

5. The cutting machine (1) of claim 3 or 4, **characterized in that** each knife pulley device (13, 15, 21, 23) comprises at least one knife pulley (17, 17a).

6. The cutting machine (1) of claim 5, **characterized in that** at least one knife pulley (17) of each knife pulley device (13, 15, 21, 23) is tilted with respect to principal plane (100) that is vertical to the cutting plane (102).

7. The cutting machine (1) of one of claims 1 to 6, **characterized in that** the lateral faces (3b) of the band knife (3) contact each other in the cutting zone (7).

8. The cutting machine (1) of one of claims 1 to 7, **characterized in that** a knife guide (29) is arranged upstream and/or downstream of the cutting section (7).

9. The cutting machine (1) of one of claims 1 to 8, **characterized in that** the band knife (3) comprises a cutting edge (3a) chamfered on one side, preferably a toothed cutting edge.

10. The cutting machine (1) of one of claims 1 to 9, **characterized in that** at least one sharpening apparatus (31) is arranged in the revolution path of the band knife (3).

11. The cutting machine (1) of claim 10, **characterized in that** the sharpening apparatus sharpens one chamfer (3b) of the band knife (3) guided in opposed directions.

12. The cutting machine (1) of one of claims 1 to 11, **characterized in that** the first and the second deflecting means (9, 11) are arranged on a common frame (50) that is supported for pivoting movement.

13. The cutting machine (1) of one of claims 3 to 12, **characterized in that** at least one of the knife pulley devices (13, 15, 21, 23) comprises a drive.

14. The cutting machine (1) of one of claims 3 to 13, **characterized in that** at last one of the knife pulley devices (13, 15, 21, 23) comprises a tensioning device.

## Revendications

1. Machine à découper (1) comportant une lame de scie à ruban (3) pour scierie mobile, la lame de scie à ruban (3) étant guidé dans des sens opposés sur un tronçon de circulation (5) de la lame de scie à ruban (3) qui forme la zone de coupe (7), et des premier et second moyens de déviation (9, 11) destinés à dévier et remettre en circulation la lame de scie à ruban (3),
**caractérisée en ce que**
les premier et second moyens de déviation (9, 11) dévient et remettent en circulation la lame de scie à ruban à chaque fois sans flexion alternée.

2. Machine à découper (1) selon la revendication 1, **caractérisée en ce que**, lors d'une circulation complète de la lame de scie à ruban (3), la lame de scie à ruban (3) est guidée sans flexion alternée.

3. Machine à découper (1) selon la revendication 1 ou 2, **caractérisée en ce que** les premier et second moyens de déviation (9, 11) comportent chacun un premier dispositif de disque à lame (13, 21) et un second dispositif de disque à lame (15, 23).

4. Machine à découper (1) selon la revendication 3, **caractérisée en ce que** les premier et second dispositifs de disque à lame (13, 21, 15, 23) font passer chacun la lame de scie à ruban dans le moyen de déviation respectif (9, 11) au niveau du brin de la lame de scie (25) arrivant au moyen de déviation (9, 11) et du brin de la lame de scie (27) quittant le moyen de déviation (9, 11).

5. Machine à découper (1) selon la revendication 3 ou 4, **caractérisée en ce que** chaque dispositif de disque à lame (13, 15, 21, 23) comporte au moins un disque à lame (17, 17a).

6. Machine à découper (1) selon la revendication 5, **caractérisée en ce qu'**au moins un disque à lame (17) de chaque dispositif de disque à lame (13, 15, 21, 23) est incliné par rapport à un plan principal (100) perpendiculaire au plan de découpe (102).

7. Machine à découper (1) selon l'une des revendications 1 à 6, **caractérisée en ce que** les faces latérales (3b) de la lame de scie à ruban (3) se touchent dans la zone de découpe (7).

8. Machine à découper (1) selon l'une des revendications 1 à 7, **caractérisée en ce qu'**un guide de coupe (29) est disposé avant et/ou après la zone de découpe (7).

9. Machine à découper (1) selon l'une des revendications 1 à 8, **caractérisée en ce que** la lame de scie à ruban (3) comporte un tranchant (3a) biseauté, de préférence denté, sur un seul côté.

10. Machine à découper (1) selon l'une des revendications 1 à 9, **caractérisée en ce qu'**au moins une unité de meulage (31) est disposée dans la zone de circulation de la lame de scie à ruban (3).

11. Machine à découper (1) selon la revendication 10, **caractérisée en ce que** l'unité de meulage meule un biseau (3b) de la lame de scie à ruban (3) guidée dans le sens inverse.

12. Machine à découper (1) selon l'une des revendications 1 à 11, **caractérisée en ce que** les premier et second moyens de déviation (9, 11) sont disposés sur un cadre commun (50) qui est monté pivotant.

13. Machine à découper (1) selon l'une des revendications 3 à 12, **caractérisée en ce qu'**au moins un des dispositifs de disque à lame (13, 15, 21, 23) comporte un entraînement.

14. Machine à découper (1) selon l'une des revendications 3 à 13, **caractérisée en ce qu'**au moins un des dispositifs de disque à lame (13, 15, 21, 23) comporte un dispositif tendeur.
